# EUROPEAN PATENT APPLICATION

(11) **EP 3 281 696 A1**
(43) Date of publication of application: **14.02.2018**
(21) Application number: 16776250.9
(22) Date of filing: 11.03.2016
(51) Int. Cl.: B01J 23/22, B01D 39/20, B01D 53/94, F01N 3/022, F01N 3/023, F01N 3/10

(54) **PARTICULATE MATTER COMBUSTION CATALYST AND PARTICULATE MATTER COMBUSTION CATALYST FILTER**

(30) Priority: 10.04.2015 JP 2015080979
(71) Applicant: Panasonic Intellectual Property Management Co., Ltd., Osaka-shi, Osaka 540-6207 (JP)
(72) Inventor: SAWA, Ryosuke, Osaka-shi OSAKA 540-6207 (JP); KINUGAWA, Kensaku, Osaka-shi OSAKA 540-6207 (JP); FURUTA, Tsutomu, Osaka-shi OSAKA 540-6207 (JP)
(74) Representative: Müller-Boré & Partner Patentanwälte PartG mbB
(86) International application number: PCT/JP2016/001391
(87) International publication number: WO 2016/163072

(57) **Abstract**

A particulate matter combustion catalyst includes: a composite oxide of cesium and vanadium, in which a molar ratio (Cs/V) of cesium to vanadium is 1.0 ≤ Cs/V ≤ 3.0. Moreover, the particulate matter combustion catalyst includes a support that supports the composite oxide and contains ceria. In particular, it is desirable that the molar ratio (Cs/V) of cesium to vanadium be 1.0 ≤ Cs/V ≤ 1.5. Furthermore, a particulate matter combustion catalyst filter 1 includes: the particulate matter combustion catalyst; and a filter 10 that supports the particulate matter combustion catalyst.

## Description

### TECHNICAL FIELD

The present invention relates to a particulate matter combustion catalyst and a particulate matter combustion catalyst filter. More specifically, the present invention relates to a particulate matter combustion catalyst, which is excellent in performance for oxidizing and removing solid carbon particles and liquid or solid high-molecular-weight hydrocarbon particles in exhaust gas emitted from a combustion engine such as a diesel engine, and relates to a particulate matter combustion catalyst filter using this particulate matter combustion catalyst.

### BACKGROUND ART

Heretofore, in a gasoline engine, technologies therefor have progressed with a severe restriction of exhaust gas, and harmful substances contained in the exhaust gas have been steadily decreasing. However, a diesel engine has special characteristics that particulates such as solid carbon particles and liquid or solid high-molecular-weight hydrocarbon particles are emitted as harmful components, and accordingly, legal regulation and technological development for the diesel engine have been delayed in comparison with the gasoline engine.

Incidentally, particulates emitted from an internal combustion engine of an automobile, particularly particulates emitted from the diesel engine, are mostly 1 µm or less in particle diameter, are likely to float in the atmosphere, and are likely to be taken into a human body by breathing. Moreover, it has been made apparent that carcinogenic substances such as benzopyrene are contained in the particulates, and an influence thereof on the human body has been becoming a big problem. Therefore, a variety of methods for efficiently removing the particulates emitted from the diesel engine have been studied.

In recent years, as one of the methods for removing the particulates, there has been developed a method using a heat-resistant exhaust gas purification filter such as a ceramic honeycomb, a ceramic foam and a metal foam. In this method, the particulates in the exhaust gas are first collected by the exhaust gas purification filter. Then, when a back pressure increases due to the collection of the particulates, the exhaust gas purification filter is heated by a burner, a heater or the like, and the accumulated particulates are burned, converted to carbon dioxide gas, and are discharged to the outside, whereby the filter is recovered. However, in accordance with this method, a large amount of energy is required to burn the collected particulates and to recover the filter. Moreover, since a combustion temperature of the particulates becomes high, there has been an apprehension that melting and cracking of the filter may occur.

Meanwhile, there is a method for recovering the filter, in which a catalyst is supported on the exhaust gas purification filter, and the particulates are burned by a catalytic function, whereby such a combustion operation by the burner or the heater is reduced. For example, a method has been studied, in which an oxidation catalyst is supported on a heat-resistant ceramic filter beforehand, and a combustion reaction is performed together with the collection of the particulates.

Heretofore, as such an exhaust gas purification filter as described above, one that supports a platinum-based catalyst has been mainly used. However, from a viewpoint of protecting earth resources, and from a standpoint of reducing manufacturing cost due to a remarkable rise of a noble metal price, it has been desired that an amount of noble metal for use in the exhaust gas purification filter be reduced. Therefore, researches on a heat-resistant exhaust gas purification filter using a non-platinum-based catalyst have been advanced in recent years (for example, refer to Patent Literatures 1 to 6).

### CITATION LIST

### PATENT LITERATURE

Patent Literature 1: International Publication No. WO 2012/147333
Patent Literature 2: Japanese Unexamined Patent Application Publication No. 2003-214138
Patent Literature 3: Japanese Unexamined Patent Application Publication No. 2002-210368
Patent Literature 4: Japanese Unexamined Patent Application Publication No. 2006-21108
Patent Literature 5: Japanese Unexamined Patent Application Publication No. 2007-255326
Patent Literature 6: Japanese Unexamined Patent Application Publication No. 2012-135742

### SUMMARY OF INVENTION

However, a temperature of the exhaust gas of the diesel engine is much lower than that of the gasoline engine. Therefore, even if the oxidation catalyst is supported, a combustion operation by a heater or the like may be required in some cases since oxidation performance is insufficient. As a result, the catalyst is thermally deteriorated due to the combustion operation, and accordingly, there has been an apprehension that catalytic activity may decrease. Moreover, the particulates burn due to the combustion operation, and there has been an apprehension that combustion heat generated by this combustion and the exhaust gas may also cause the catalyst to thermally deteriorate and deactivate. Therefore, there is a strong demand for a combustion catalyst that has oxidation activity at a lower temperature and is capable of reducing energy for use in the combustion operation.

The present invention has been made in consideration of such problems as described above, which are inherent in the prior art. Then, it is an object of the present invention to provide a particulate matter combustion catalyst excellent in low-temperature flammability, and to provide a particulate matter combustion catalyst filter using the same.

In order to solve the above-described problems, a particulate matter combustion catalyst according to a first aspect of the present invention includes a composite oxide of cesium and vanadium, in which a molar ratio (Cs/V) of cesium to vanadium is 1.0 ≤ Cs/V ≤ 3.0. Moreover, the particulate matter combustion catalyst includes a support that supports the composite oxide and contains ceria.

A particulate matter combustion catalyst filter according to a second aspect of the present invention includes: the particulate matter combustion catalyst; and a filter that supports the particulate matter combustion catalyst. The filter is a filter, which is made of any of a silicon carbide substrate, a cordierite substrate, a metal substrate, and an aluminum titanate substrate, and moreover, is of a wall-through type or a flow-through type.

### BRIEF DESCRIPTION OF DRAWINGS

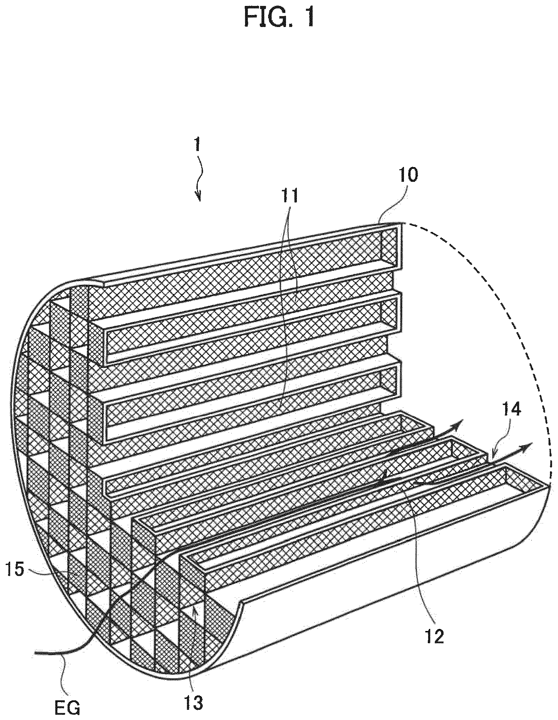

[Fig. 1] Fig. 1 is a perspective view showing an example of a particulate matter combustion catalyst filter according to an embodiment of the present invention in a state in which a part thereof is cut away.

### DESCRIPTION OF EMBODIMENTS

Hereinafter, a description will be made in detail of a particulate matter combustion catalyst according to this embodiment and a particulate matter combustion catalyst filter using the same.

### [Particulate matter combustion catalyst]

The particulate matter combustion catalyst according to this embodiment includes a composite oxide (Cs-V composite oxide) of cesium and vanadium, and a support that supports the composite oxide.

Heretofore, vanadium has been used as a catalyst for promoting oxidation of particulates. However, when vanadium is used alone as a catalyst component, there is an apprehension that the vanadium may melt and sublime to reduce low-temperature activity thereof at the time of being reacted at a high temperature. Therefore, the particulate matter combustion catalyst of this embodiment uses the composite oxide of cesium and vanadium in order to obtain the low-temperature activity.

Specifically, the particulate matter combustion catalyst according to this embodiment contains a composite oxide of cesium and vanadium, in which a molar ratio (Cs/V) of cesium to vanadium is 1.0 ≤ Cs/V ≤ 3.0. By using such a Cs-V composite oxide, a combustion initiation temperature (oxidation initiation temperature) of the particulates shifts to a lower temperature side. Therefore, energy for use in a combustion operation can be reduced while suppressing a thermal degradation of the particulate matter combustion catalyst. Moreover, since a vanadium compound has an effect of taking in oxygen in exhaust gas and converting the taken oxygen into active oxygen, it is presumed that a conversion effect to the active oxygen is enhanced in such a manner that the vanadium compound forms such a composite oxide with cesium. Furthermore, as described later, the Cs-V composite oxide is supported on a specific support having high thermal stability and high specific surface area. Therefore, it becomes possible to suppress aggregation of the Cs-V composite oxide due to combustion heat of the particulates and the exhaust gas, and to maintain good low-temperature activity for a long period of time.

As the above-mentioned Cs-V composite oxide, for example, there can be mentioned CsVO₃ (cesium metavanadate, Cs:V = 1.0:1.0), Cs₅V₃O₁₀ (Cs:V = 1.7:1.0), Cs₃₂V₁₈O₆₁ (Cs:V = 1.8:1.0), Cs₄V₂O₇ (Cs:V = 2.0:1.0), Cs₃VO₄ (Cs:V = 3.0:1.0), and the like. Among them, as the Cs-V composite oxide, it is preferable that the molar ratio (Cs/V) of cesium to vanadium be Cs/V = 1.0. That is, it is preferable to use cesium metavanadate as the Cs-V composite oxide. Since cesium metavanadate has high chemical stability, it becomes possible to maintain excellent catalytic activity over a long period of time.

The particulate matter combustion catalyst of this embodiment includes a support that supports the Cs-V composite oxide on a surface thereof. As described later, the Cs-V composite oxide alone has high particulate flammability. However, when the Cs-V composite oxide is used alone as the combustion catalyst, a specific surface area of the catalyst is small, and accordingly, there is an apprehension that a contact ratio between the particulates and the catalyst may decrease to make it difficult to cause a combustion reaction. Moreover, when the catalyst is disposed in an exhaust manifold of an internal combustion engine without using the support, there is an apprehension that the catalyst may easily aggregate due to fluctuations of a temperature and composition of the exhaust gas and may result in a decrease of the catalytic activity. Therefore, particles of the Cs-V composite oxide are brought into contact with and held on the surface of the support, whereby such aggregation of the Cs-V composite oxide in the high-temperature atmosphere can be suppressed while increasing the specific surface area thereof.

As the support that supports the Cs-V composite oxide, it is preferable to use a support containing ceria. The support containing ceria is used, whereby it becomes possible to strike a balance between the increase of the specific surface area and the suppression of the aggregation while maintaining the low-temperature activity inherent in the Cs-V composite oxide. Moreover, ceria also has an oxygen storage/release capability corresponding to an excess air ratio of the exhaust gas. Then, the vanadium compound has the effect of taking in oxygen in the exhaust gas and converting the taken oxygen into active oxygen. Therefore, not only the oxygen in the exhaust gas but also the oxygen released from the ceria is converted into the active oxygen by the vanadium compound, and accordingly, it becomes possible to further promote the oxidation reaction of the particulates by the generated active oxygen.

Note that, preferably, the support that supports the Cs-V composite oxide contains ceria as a main component. That is, preferably, the support that supports the Cs-V composite oxide contains ceria by 50 mol% or more. Such a support that contains ceria as a main component has a particularly high oxygen storage/release capability, and accordingly, it becomes possible to further enhance generation efficiency for the active oxygen. Note that the support that supports the Cs-V composite oxide contains ceria preferably by 70 mol% or more, more preferably by 90 mol% or more. Moreover, the support may contain elements other than ceria, and for example, may contain at least one selected from the group consisting of zirconium, titanium, silicon, praseodymium, iron, manganese, cobalt and nickel. Such metal elements as described above can enhance heat resistance of the support and can promote the release of the active oxygen. Note that, since the low-temperature activity of the catalyst is deteriorated when alumina is used as the support, it is preferable that the support should not contain alumina.

An average particle diameter (median diameter, D50) of the support is not particularly limited, but it is preferably 10 nm to 10 µm from the viewpoint of increasing the contact interface between the Cs-V composite oxide and the particulate.

As mentioned above, the particulate matter combustion catalyst of this embodiment exhibits high carbon flammability from a low temperature. Therefore, even if noble metal such as platinum, palladium and rhodium, which has been a component essential for the conventional exhaust gas purification filter, is not added to the particulate matter combustion catalyst, it becomes possible for the particulate matter combustion catalyst to efficiently burn and remove the particulates. Moreover, by the fact that the noble metal is not used, it becomes possible to reduce material cost to a large extent. However, the particulate matter combustion catalyst of this embodiment does not exclude addition of the noble metal, and a small amount of the noble metal may be added thereto from a viewpoint of further enhancing the low-temperature activity.

As described above, the particulate matter combustion catalyst of this embodiment contains the composite oxide of cesium and vanadium, in which the molar ratio (Cs/V) of cesium to vanadium is 1.0 ≤ Cs/V ≤ 3.0. Moreover, the particulate matter combustion catalyst includes a support that supports the composite oxide and contains ceria. Then, it is more preferable that the molar ratio (Cs/V) of cesium to vanadium be 1.0 ≤ Cs/V ≤ 1.5, and it is particularly preferable that the molar ratio (Cs/V) of cesium to vanadium be Cs/V = 1.0. By using such a particulate matter combustion catalyst as described above, it becomes possible to efficiently remove the particulates by enhancing the contact ratio with the particulates while suppressing the thermal degradation of the catalyst by shifting the combustion temperature of the particulates to the lower temperature side.

### [Method for manufacturing particulate matter combustion catalyst]

Next, a description will be made of a method for manufacturing the particulate matter combustion catalyst of this embodiment. First, a cesium component and a vanadium component, which are precursors of the composite oxide of cesium and vanadium, are dissolved into a solvent, whereby a mixed aqueous solution is prepared. At this time, a mixing ratio of the cesium component and the vanadium component is adjusted so that the molar ratio of cesium and vanadium can be 1.0: 1.0 to 3.0: 1.0.

As the cesium component, for example, there can be mentioned at least one selected from the group consisting of cesium hydroxide (CsOH), cesium carbonate (Cs₂CO₃), cesium sulfate (Cs₂SO₄), cesium nitrate (CsNO₃) and cesium chloride (CsCl). Moreover, as the vanadium component, for example, there can be mentioned at least one selected from the group consisting of vanadium oxide (vanadium oxide (V) (divanadium pentoxide, V₂O₅), vanadium oxide (II) (VO)), vanadium (IV) oxide sulfate n-hydrate, and ammonium metavanadate (NH₄VO₃). As the solvent, for example, there can be used an aqueous medium including pure water such as ion exchange water, ultrafiltration water, reverse osmosis water, and distilled water, including ultrapure water or the like.

Moreover, the mixed aqueous solution mentioned above can also be prepared by dissolving a composite oxide of cesium and vanadium, which is synthesized in advance, in the solvent. Specifically, the mixed aqueous solution can be obtained also in such a manner that the composite oxide of cesium and vanadium, in which the molar ratio (Cs/V) of cesium to vanadium is 1.0 ≤ Cs/V ≤ 3.0, is dissolved into the solvent.

Note that a method for synthesizing the composite oxide of cesium and vanadium is not particularly limited; however, for example, Cs₄V₂O₇ in which a molar ratio of cesium and vanadium is 2.0: 1.0 can be synthesized as follows. First, the above-mentioned mixed aqueous solution of the cesium component and the vanadium component is prepared so that the molar ratio of cesium and vanadium can become 2.0: 1.0. In this case, it is preferable to use cesium carbonate as the cesium component, and it is preferable to use divanadium pentoxide as the vanadium component. Next, this mixed aqueous solution is dried, is baked at 900°C or higher for approximately 2 hours, and thereafter, is annealed at 300°C for 24 hours, whereby Cs₄V₂O₇ can be synthesized.

Next, support powder is poured into the mixed aqueous solution obtained by the above-mentioned method, and is stirred, whereby catalyst slurry is prepared. At this time, as a support, the support containing ceria as mentioned above is used.

Then, the obtained catalyst slurry is dried, and the solvent is removed therefrom. A method for drying the catalyst slurry is not particularly limited; however, for example, the mixed aqueous solution may by dried and solidified on a water bath. Moreover, the mixed aqueous solution may be placed in a dryer at approximately 100°C to volatilize the solvent, or a rotary evaporator may be used.

Subsequently, a solid obtained by drying is baked. At the time of baking the obtained solid, it is preferable to grind the solid by using a mortar or the like. Baking conditions are not particularly limited as long as the cesium component and the vanadium component react with each other to obtain the composite oxide of cesium and vanadium. However, it is preferable to set a baking temperature, for example, to 700 to 900°C, and it is preferable to set a baking time, for example, to 1 to 8 hours. Such baking of the solid can be carried out in the air, and at that time, the baking may be performed by an air flow type or a non-flow type. In such a manner as described above, the particulate matter combustion catalyst of this embodiment can be obtained.

As described above, the particulate matter combustion catalyst of this embodiment can be obtained by metal salt decomposition using metal salts of cesium and vanadium, and accordingly, can be prepared by an inexpensive method.

### [Particulate matter combustion catalyst filter]

The particulate matter combustion catalyst filter of this embodiment includes: the particulate matter combustion catalyst as mentioned above; and a filter that supports the particulate matter combustion catalyst. By supporting the particulate matter combustion catalyst on the filter, the specific surface area of the particulate matter combustion catalyst increases, and accordingly, it becomes possible to enhance the contact ratio with the exhaust gas and the particulates.

As such a filter, a filter can be used, which is made of any one of a silicon carbide substrate, a cordierite substrate, a metal substrate and an aluminum titanate substrate. Moreover, as the filter, a wall-through type filter or flow-through type filter can be used. In particular, from a viewpoint of efficiently collecting the particulates, it is preferable to use a diesel particulate filter (DPF) that is a wall-through type filter. By using the DPF, it becomes possible to burn the collected particulates by the particulate matter combustion catalyst while efficiently collecting the particulates.

Fig. 1 shows an example of a particulate matter combustion catalyst filter 1 in a state in which a part thereof is cut away. A filter 10 shown in Fig. 1 is formed into a columnar shape as a whole. Then, the filter 10 includes a plurality of cells 11 partitioned by a cell wall 12 having a plurality of pores. The respective cells 11 are formed parallel to one another by the cell wall 12. Moreover, the cells 11 have closed end faces 15 in which end faces of exhaust gas inlets 13 or exhaust gas outlets 14 are sealed. Then, the filter 10 is configured so that, between the cells 11 adjacent to each other, the closed end faces 15 can be arranged so as to be alternately reversed on the exhaust gas inlet side and the exhaust gas outlet side. In terms of such a relationship as described above, where the end faces in the cells 11 are closed, entire end faces of the exhaust gas inlets 13 or the exhaust gas outlets 14 form a closed pattern like a checkerboard (checkered pattern) in the filter 10. That is, the filter 10 forms such a closed pattern in which the exhaust gas inlet side and outlet side reverse opening and closing thereof.

Then, in the filter 10, as illustrated, exhaust gas EG passes through each of open end faces (exhaust gas inlets 13) of the cells 11, passes through the pores of the cell wall 12 to flow into the adjacent cells 11, and is emitted from open end faces (exhaust gas outlets 14) of the adjacent cells 11. Then, in the filter 10, on a surface of the cell wall 12 and on surfaces of the pores present in the cell wall 12, the particulates are collected and accumulated. Note that, since the above-mentioned particulate matter combustion catalyst is supported on the surface of the cell wall 12 and the surfaces of the pores present in the cell wall 12, the accumulated particulates are immediately oxidized by the particulate matter combustion catalyst.

An average pore diameter of the pores provided in the cell wall 12 is not particularly limited; however, can be set to, for example, 5 µm to 50 µm. When the average pore diameter is 5 µm or more, an excessive increase of a pressure loss can be suppressed even if the particulates accumulate. Meanwhile, when the average pore diameter is 50 µm or less, excessive passing of the particulates can be suppressed.

A method for supporting the particulate matter combustion catalyst on the filter is not particularly limited. For example, the above-mentioned particulate matter combustion catalyst is dispersed into a dispersion solvent to prepare combustion catalyst slurry, thereafter the combustion catalyst slurry is applied to the filter, followed by drying and baking, whereby the particulate matter combustion catalyst can be supported on the filter. At this time, as the dispersion solvent, for example, there can be used an aqueous medium including pure water such as exchange water, ultrafiltration water, reverse osmosis water, and distilled water, including ultrapure water or the like. Moreover, as the dispersion solvent, an organic solvent may be used. For example, alcohols and ketones can also be used. These dispersion solvents may be used singly or in combination of two or more types thereof.

Note that, in order to make it easy to attach and fix the particulate matter combustion catalyst to the filter, a binder that binds such combustion catalysts to one another may be used. That is, after the binder is added to the combustion catalyst slurry, the combustion catalyst slurry is applied to the filter, followed by drying and baking, whereby the particulate matter combustion catalyst may be supported. As the binder, for example, at least one selected from the group consisting of alumina sol, silica sol, zirconia sol and ceria sol can be used.

The particulate matter combustion catalyst filter of this embodiment includes: the particulate matter combustion catalyst as mentioned above; and a filter that supports the particulate matter combustion catalyst. Then, the filter is made of any of a silicon carbide substrate, a cordierite substrate, a metal substrate, and an aluminum titanate substrate, and is of a wall-through type or a flow-through type. As described above, the particulate matter combustion catalyst of this embodiment is supported on the filter, and the particulate matter combustion catalyst filter is formed, whereby the pressure loss can be reduced more than in the case of filling a catalyst converter with a granular particulate matter combustion catalyst, and it becomes possible to reduce a supply pressure. Moreover, the particulate matter combustion catalyst is supported on the filter, whereby the contact ratio with the exhaust gas and the particulates is enhanced. Therefore, it becomes possible to suppress a usage amount of the particulate matter combustion catalyst, and to reduce the material cost. Furthermore, the particulate matter combustion catalyst filter of this embodiment has a high particulate collection capability, and further, burns the collected particulates from a low temperature. Therefore, the particulates emitted to the atmosphere are reduced to a large extent, and accordingly, it becomes possible to reduce a load on the environment.

### EXAMPLES

Hereinafter, this embodiment will be described more in detail by examples and comparative examples; however, this embodiment is not limited to these examples.

### [Preparation of catalyst]

### (Example 1)

First, a mixed aqueous solution of cesium carbonate and divanadium pentoxide was prepared so that a molar ratio of cesium and vanadium could become 1.0:1.0. Next, the mixed aqueous solution was added to a ceria support (made by Anan Kasei Co., Ltd.) in a mortar, and thereafter, was evaporated and coagulated at 110°C for 3 hours by using a drying furnace (high-temperature incubator HISPEC HT3205 manufactured by Kusumoto Chemicals, Ltd.).

Next, a solid thus obtained was pulverized in a mortar, and was baked at 800°C for 3 hours in the atmosphere under a heating rate of 5°C/min by using an electric furnace (muffle furnace FP410 made by Yamato Scientific Co., Ltd.), whereby a catalyst of this example was synthesized. Note that a supported amount of the vanadium metal was set to 10 g with respect to 100 g of the ceria support.

### (Example 2)

First, a mixed aqueous solution of cesium carbonate and divanadium pentoxide was prepared so that a molar ratio of cesium and vanadium could become 1.3:1.0. Next, the mixed aqueous solution was added to a ceria support (made by Anan Kasei Co., Ltd.) in a mortar, and thereafter, was evaporated and coagulated at 110°C for 3 hours by using the drying furnace of Example 1. Then, a solid thus obtained was baked in a similar way in Example 1, whereby a catalyst of this example was synthesized. Note that a supported amount of the vanadium metal was set to 10 g with respect to 100 g of the ceria support.

### (Example 3)

First, a mixed aqueous solution of cesium carbonate and divanadium pentoxide was prepared so that a molar ratio of cesium and vanadium could become 1.5:1.0. Next, the mixed aqueous solution was added to a ceria support (made by Anan Kasei Co., Ltd.) in a mortar, and thereafter, was evaporated and coagulated at 110°C for 3 hours by using the drying furnace of Example 1. Then, a solid thus obtained was baked in a similar way in Example 1, whereby a catalyst of this example was synthesized. Note that a supported amount of the vanadium metal was set to 10 g with respect to 100 g of the ceria support.

### (Example 4)

A catalyst of this example was synthesized in a similar way to Example 1 except that a mixed aqueous solution was prepared by using a commercially available Cs-V composite oxide in which a molar ratio of cesium and vanadium was 2.0:1.0. Note that a supported amount of the vanadium metal was set to 10 g with respect to 100 g of the ceria support.

### (Example 5)

A catalyst of this example was synthesized in a similar way to Example 1 except that a mixed aqueous solution was prepared by using a commercially available Cs-V composite oxide in which a molar ratio of cesium and vanadium was 3.0:1.0. Note that a supported amount of the vanadium metal was set to 10 g with respect to 100 g of the ceria support.

### (Comparative example 1)

First, an aqueous solution of divanadium pentoxide was prepared. Next, this aqueous solution was added to an alumina support (made by Sasol Corporation) in a mortar, and thereafter, was evaporated and coagulated at 110°C for 3 hours by using the drying furnace of Example 1.

Next, a solid thus obtained was pulverized in a mortar, and was baked at 800°C for 3 hours in the atmosphere under a heating rate of 5°C/min by using the electric furnace of Example 1, whereby a catalyst of this example was synthesized. Note that a supported amount of the vanadium metal was set to 10 g with respect to 100 g of the alumina support.

### (Comparative example 2)

First, a mixed aqueous solution of cesium sulfate and vanadium (IV) oxide sulfate n-hydrate was prepared so that a molar ratio of cesium and vanadium could become 0.5:1.0. Next, this mixed aqueous solution was added to an alumina support (made by Sasol Corporation) in a mortar, and thereafter, was evaporated and coagulated at 110°C for 3 hours by using the drying furnace of Example 1.

Next, a solid thus obtained was pulverized in a mortar, and was baked at 800°C for 3 hours in the atmosphere under a heating rate of 5°C/min by using the electric furnace of Example 1, whereby a catalyst of this example was synthesized. Note that a supported amount of the vanadium metal was set to 10 g with respect to 100 g of the alumina support.

### (Comparative example 3)

A catalyst of this example was synthesized in a similar way to Comparative example 2 except that a mixed aqueous solution of cesium carbonate and divanadium pentoxide was prepared so that a molar ratio of cesium and vanadium could become 1.0:1:0. Note that a supported amount of the vanadium metal was set to 10 g with respect to 100 g of the alumina support.

### (Comparative example 4)

A catalyst of this example was synthesized in a similar way to Comparative example 2 except that a mixed aqueous solution was prepared by using a commercially available Cs-V composite oxide in which a molar ratio of cesium and vanadium was 1.7:1.0. Note that a supported amount of the vanadium metal was set to 10 g with respect to 100 g of the alumina support.

### (Comparative example 5)

A catalyst of this example was synthesized in a similar way to Comparative example 2 except that a mixed aqueous solution was prepared by using a commercially available Cs-V composite oxide in which a molar ratio of cesium and vanadium was 1.8:1.0. Note that a supported amount of the vanadium metal was set to 10 g with respect to 100 g of the alumina support.

### (Comparative example 6)

A catalyst of this example was synthesized in a similar way to Comparative example 2 except that a mixed aqueous solution was prepared by using a commercially available Cs-V composite oxide in which a molar ratio of cesium and vanadium was 2.0:1.0. Note that a supported amount of the vanadium metal was set to 10 g with respect to 100 g of the alumina support.

### (Comparative example 7)

A catalyst of this example was synthesized in a similar way to Comparative example 2 except that a mixed aqueous solution was prepared by using a commercially available Cs-V composite oxide in which a molar ratio of cesium and vanadium was 3.0:1.0. Note that a supported amount of the vanadium metal was set to 10 g with respect to 100 g of the alumina support.

### (Comparative example 8)

First, a mixed aqueous solution of a commercially available hexaammineplatinum hydroxide solution (made by Tanaka Kikinzoku Kogyo K.K.) and a commercially available palladium nitrate solution (made by Tanaka Kikinzoku Kogyo K.K.) was prepared so that a molar ratio of platinum and palladium could become 35:65. Next, this mixed aqueous solution was added to an alumina support (made by Sasol Corporation) in a mortar, and thereafter, was evaporated and coagulated at 110°C for 3 hours by using the drying furnace of Example 1.

Next, a solid thus obtained was pulverized in a mortar, and was baked at 800°C for 3 hours in the atmosphere under a heating rate of 5°C/min by using the electric furnace of Example 1, whereby a catalyst of this example was synthesized. Note that a total supported amount of platinum and palladium was set to approximately 2 g with respect to 100 g of the alumina support.

### (Comparative example 9)

The Ag/CeO₂ standard catalyst used in the Catalysis Society of Japan was used as a catalyst of this example. Note that a supported amount of silver metal was 2 g with respect to 100 g of a CeO₂ support. Moreover, as the CeO₂ support, JRC-CEO-3 made by Mitsui Mining & Smelting Co., Ltd. was used.

### (Reference example 1)

First, a mixed aqueous solution of cesium sulfate and vanadium (IV) oxide sulfate n-hydrate was prepared so that a molar ratio of cesium and vanadium could become 0.5:1.0. Next, this mixed aqueous solution was evaporated and coagulated at 110°C for 3 hours by using the drying furnace of Example 1.

Then, a solid thus obtained was pulverized in a mortar, and was baked at 800°C for 3 hours in the atmosphere under a heating rate of 5°C/min by using the electric furnace of Example 1, whereby a catalyst of this example was synthesized.

### (Reference example 2)

A catalyst of this example was synthesized in a similar way to Reference example 1 except that a mixed aqueous solution of cesium carbonate and divanadium pentoxide was prepared so that a molar ratio of cesium and vanadium could become 1.0:1:0.

### (Reference example 3)

A catalyst of this example was synthesized in a similar way to Reference example 1 except that a mixed aqueous solution of cesium carbonate and divanadium pentoxide was prepared so that a molar ratio of cesium and vanadium could become 1.8:1:0.

### (Reference example 4)

A catalyst of this example was synthesized in a similar way to Reference example 1 except that a mixed aqueous solution was prepared by using a commercially available Cs-V composite oxide in which a molar ratio of cesium and vanadium was 2.0:1.0.

### (Reference example 5)

A catalyst of this example was synthesized in a similar way to Reference example 1 except that a mixed aqueous solution was prepared by using a commercially available Cs-V composite oxide in which a molar ratio of cesium and vanadium was 3.0:1.0.

### [Evaluation test]

By using each of the catalyst powders prepared in Examples 1 to 3, Comparative Examples 1 to 9 and Reference Examples 1 to 5, a maximum combustion temperature of carbon powder simulating the particulates was measured.

Specifically, first, the obtained catalyst powder, carbon black and silicon carbide powder were weighed so that a mass ratio thereof could become 1:5:38, and were mixed for 30 minutes by using an agate mortar, whereby evaluation powder was prepared. Note that, for carbon black, JIS test powder 1 (12 carbon blacks) sold by The Association of Powder Process Industry and Engineering, JAPAN was used. Moreover, the silicon carbide powder was mixed as a constituent material of the filter.

Next, approximately 5 mg of the evaluation powder was weighed and filled in an aluminum container. Furthermore, the aluminum container filled with the evaluation powder was installed in a differential thermal analyzer (TG/DTA 6200, made by Seiko Instruments Inc.). Then, under a condition where air was flown at a flow rate of 100 ml/min, a furnace temperature was increased at a rate of 10°C/min, and a maximum temperature of an exothermic peak due to carbon combustion was measured as the maximum combustion temperature.

Measurement results of the maximum combustion temperatures in the catalyst powders of Examples 1 to 3 and Comparative Examples 1 to 9 are shown in Table 1. Note that, the lower the maximum combustion temperature is, the higher the combustion performance at low temperature is.

**[Table 1]**

| | Catalyst | Maximum combustion temperature [°C] |
|---|---|---|
| Example 1 | CsVO₃/CeO₂ support (Cs:V=1.0:1.0) | 490 |
| Example 2 | Cs-V composite oxide / CeO₂ support (Cs:V=1.3:1.0) | 493 |
| Example 3 | Cs-V composite oxide / CeO₂ support (Cs:V=1.5:1.0) | 495 |
| Example 4 | Cs₄V₂O₇ / CeO₂ support (Cs:V=2.0:1.0) | 495 |
| Example 5 | Cs₃VO₄ / CeO₂ support (Cs:V=3.0:1.0) | 489 |
| Comparative example 1 | V₂O₅ / Al₂O₃ support (Cs:V=0:1.0) | 514 |
| Comparative example 2 | Cs₂V₄O₁₁ / Al₂O₃ support (Cs:V=0.5:1.0) | 504 |
| Comparative example 3 | CsVO₃ / Al₂O₃ support (Cs:V=1.0:1.0) | 533 |
| Comparative example 4 | Cs₅V₃O₁₀ / Al₂O₃ support (Cs.V=1.7:1.0) | 539 |
| Comparative example 5 | Cs₃₂V₁₈O₆₁ / Al₂O₃ support (Cs:V=1.8:1.0) | 537 |
| Comparative example 6 | Cs₄V₂O₇ / Al₂O₃ support (Cs:V=2.0:1.0) | 544 |
| Comparative example 7 | Cs₃VO₄ / Al₂O₃ support (Cs:V=3.0:1.0) | 534 |
| Comparative example 8 | Pt-Pd / Al₂O₃ support | 600 or more |
| Comparative example 9 | Ag / CeO₂ support (standard catalyst) | 600 or more |

As shown in Table 1, it was confirmed that the catalysts of Examples 1 to 5 according to this embodiment had a maximum combustion temperature of less than 500°C, and had excellent carbon flammability as compared with the conventional catalyst.

In contrast, it was confirmed that the catalysts of Comparative Examples 1 to 9 had a maximum combustion temperature exceeding 500°C, and had insufficient carbon flammability. In particular, though 1.0 ≤ Cs/V ≤ 3.0 is satisfied, in Comparative Examples 3 to 7 using the alumina support, the maximum combustion temperature of each thereof exceeded 530°C. Therefore, it is seen that the carbon flammability is deteriorated when the composite oxide of cesium and vanadium is supported on alumina.

**[Table 2]**

| | Catalyst | Maximum combustion temperature [°C] |
|---|---|---|
| Reference example 1 | Cs₂V₄O₁₁ (Cs:V=0.5:1.0) | 487 |
| Reference example 2 | CsVO₃ (Cs:V=1.0:1.0) | 486 |
| Reference example 3 | Cs₃₂V₁₈O₆₁ (Cs:V=1.8:1.0) | 488 |
| Reference example 4 | Cs₄V₂O₇ (Cs:V=2.0:1.0) | 479 |
| Reference example 5 | Cs₃VO₄ (Cs:V=3.0:1.0) | 484 |

Table 2 shows measurement results of maximum combustion temperatures of the catalysts made of the composite oxides of cesium and vanadium, which did not use a support. As shown in Table 2, when the support is not used, carbon flammability equivalent to those of Examples 1 to 3 is exhibited. However, when the catalyst is disposed in an exhaust manifold of an internal combustion engine without using the support, it is presumed that the catalyst easily aggregates due to the fluctuations of the temperature and rich/lean composition of the exhaust gas and results in the decrease of the catalytic activity. Therefore, as in the examples, it is preferable to carry the composite oxide of cesium and vanadium on the support containing ceria.

### [Fabrication of catalyst filter]

### (Example 4)

Each of the catalysts of Examples 1 to 3 was coated on a filter made of silicon carbide. Specifically, first, the catalyst of Example 1 was added to water and stirred, whereby a slurry liquid in which the catalyst of Example 1 was dispersed was prepared. In a similar way, slurry liquids in which the catalysts of Example 2 and Example 3 were dispersed were individually prepared. Then, the above-mentioned filter was immersed into each of the slurry liquids. Next, after being taken out from each of the slurry liquids, the filter was dried at 110°C for 1 hour, and was baked at 700°C for 5 hours in the atmosphere, whereby a catalyst filter in which the filter was coated with the catalyst was obtained.

Each of the catalyst filters which supported the catalysts of Examples 1 to 3 was pulverized and analyzed by energy dispersive X-ray spectroscopy (EDX) and inductively coupled plasma mass spectrometry (ICP-MS), and as a result, the molar ratio (Cs/V) of cesium and vanadium, which were contained in each of the catalyst filters, was 1.0 to 1.5. As described above, it was confirmed that, by using each of the catalysts of Examples 1 to 3, the particulate matter combustion catalyst filter could be obtained.

The entire contents of Japanese Patent Application No. 2015-080979 (filed on: April 10, 2015) is incorporated herein by reference.

Although the contents of this embodiment have been described above in accordance with the embodiments, it is obvious to those skilled in the art that this embodiment is not limited to these descriptions and that various modifications and improvements are possible.

### INDUSTRIAL APPLICABILITY

The particulate matter combustion catalyst of the present invention can shift the combustion temperature of the particulates to the lower temperature side, and accordingly, it becomes possible to suppress the thermal degradation of the catalyst. Moreover, it becomes possible to reduce the energy for use in the combustion operation, and in addition, it is unnecessary to use noble metal, and accordingly, the reduction of the material cost can also be achieved.

### REFERENCE SIGNS LIST

1 particulate matter combustion catalyst filter

## Claims

1. A particulate matter combustion catalyst comprising:
a composite oxide of cesium and vanadium, in which a molar ratio (Cs/V) of cesium to vanadium is 1.0 ≤ Cs/V ≤ 3.0; and
a support that supports the composite oxide and contains ceria.

2. The particulate matter combustion catalyst according to claim 1, wherein the molar ratio (Cs/V) of cesium to vanadium is 1.0 ≤ Cs/V ≤ 1.5.

3. The particulate matter combustion catalyst according to claim 1 or 2, wherein the molar ratio (Cs/V) of cesium to vanadium is Cs/V = 1.0.

4. A particulate matter combustion catalyst filter comprising:
the particulate matter combustion catalyst according to any one of claims 1 to 3; and
a filter that supports the particulate matter combustion catalyst,
wherein the filter is made of any of a silicon carbide substrate, a cordierite substrate, a metal substrate, and an aluminum titanate substrate, and is of a wall-through type or a flow-through type.
